# EUROPÄISCHE PATENTSCHRIFT

(11) **EP 1 577 684 B1**
(45) Veröffentlichungstag und Bekanntmachung des Hinweises auf die Patenterteilung: **24.01.2007**
(21) Anmeldenummer: 05003351.3
(22) Anmeldetag: 17.02.2005
(51) Int. Cl.: G01V 8/20

(54) **Lichtgitter**
Light curtain
Rideau de lumière

(30) Priorität: 16.03.2004 DE 102004012794
(43) Veröffentlichungstag der Anmeldung: 21.09.2005
(73) Patentinhaber: SICK AG, 79183 Waldkirch (DE)
(72) Erfinder: Böckel, Günter, 79183 Waldkirch (DE); Friedrich, Ralf, 79426 Buggingen (DE); Meyer, Christof, 79261 Gutach (DE); Wüstefeld, Martin, 79350 Sexau (DE)
(74) Vertreter: Ludewigt, Christoph

(56) Entgegenhaltungen:
- EP-A- 1 180 697
- EP-A- 1 420 271
- EP-A- 1 439 404
- EP-B- 0 369 386
- US-A- 5 063 288
- US-A1- 2001 040 213

## Beschreibung

Die Erfindung betrifft ein Lichtgitter gemäß dem Oberbegriff des Anspruchs 1.

Lichtgitter werden in großem Umfang für die Erkennung und Vermessung von Gegenständen auf Förderbahnen, zur Gepäckkontrolle auf Förderbändern, zur Türsteuerung in Aufzügen, für den Hand- oder Körperschutz bei Arbeitsmaschinen, für die Zugangskontrolle von Personen und Fahrzeugen usw. verwendet. Die Lichtgitter bestehen aus in einem leistenförmigen Gehäuse beabstandet angeordneten Sende-Einheiten und in einem leistenförmigen Gehäuse entsprechend beabstandet angeordneten Empfangs-Einheiten. Die Sende-Einheiten senden Lichtstrahlen, im Allgemeinen Infrarot-Licht, aus, welches auf die Empfangs-Einheiten auftrifft. Die Unterbrechung der Lichtstrahlen wird detektiert und ausgewertet.

Die Sende-Einheiten und die Empfangs-Einheiten bestehen jeweils aus einem optoelektronischen Element und einem in Strahlrichtung von diesem beabstandeten optischen Funktionselement. Bei der Sende-Einheit sendet ein optoelektronischer Wandler Licht aus, welches durch das optische Funktionselement, eine Linse oder eine Blende, auf die entsprechende Empfangs-Einheit gebündelt wird. Die Empfangs-Einheit weist ein entsprechendes optisches Funktionselement auf, welches das Licht auf einen optoelektronischen Wandler sammelt.

Die optoelektronischen Elemente und die zugehörigen optischen Funktionselemente der einzelnen Sende- bzw. Empfangs-Einheiten müssen in dem Gehäuse gehalten werden, wobei sie in Bezug aufeinander und in Bezug auf das Gehäuse ausgerichtet werden müssen. Hierzu ist es bekannt, die jeweiligen optoelektronischen Elemente und die zugeordneten optischen Funktionselemente z. B. mittels eines Tubus zu einer Baugruppe zusammenzufassen, in welcher die optoelektronischen Elemente und die optischen Funktionselemente gegenseitig ausgerichtet sind (vgl. DE 44 30 778 C2). Die Baugruppen werden in das Gehäuse eingesetzt, wobei sie dann in Bezug auf das Gehäuse ausgerichtet werden müssen. Die Montage der optoelektronischen Elemente und der optischen Funktionselemente zu der Baugruppe und die Montage der Baugruppe in das Gehäuse führt zu einer Addition der Montagetoleranzen.

Es ist bekannt, das Gehäuse als U-förmiges Profil auszubilden, in welches die Baugruppen von der offenen Frontseite eingesetzt und eingeclipst werden. Ein solches U-förmiges Gehäuse weist eine geringe Verwindungssteifigkeit auf. Eine Verbesserung der Verwindungssteifigkeit insbesondere bei einem extrudierten Kunststoffprofil macht höhere Materialquerschnitte oder teure Werkstoffe notwendig.

Weiter ist es bekannt, ein geschlossenes Profil als Gehäuse zu verwenden. In diesem Falle müssen die Baugruppen in Längsrichtung vom Profilende her eingeschoben werden. Dies ist insbesondere bei größeren Längen aufwändig und bereitet Schwierigkeiten in der genauen Ausrichtung der Baugruppen zu dem Gehäuse. Wird ein Extrusionsprofil verwendet, so ist zudem eine mechanische Nachbearbeitung erforderlich, die die Herstellungskosten erhöht.

Weiter sind wannenförmige Kunststoffgehäuse bekannt, die eine einfache Montage der Baugruppen ermöglichen. Diese Gehäuse müssen jedoch zusätzliche Metallversteifungen aufweisen, um die nötige Stabilität und Justage zu gewährleisten.

Weitere gattungsgemäße Lichtgitter sind aus der EP 1 180 697 A1, EP 0 369 386 B1 und US 5,063,288 bekannt.

Der Erfindung liegt die Aufgabe zugrunde, ein Lichtgitter zu schaffen, bei welchem mit einem kostengünstigen Gehäuse eine einfache Montage mit hoher Genauigkeit möglich ist.

Diese Aufgabe wird erfindungsgemäß gelöst durch ein Lichtgitter mit den Merkmalen des Anspruchs 1.

Vorteilhafte Ausführungen der Erfindung sind in den Unteransprüchen angegeben.

Der wesentliche Gedanke der Erfindung besteht darin, den zwischen den einzelnen Sende- bzw. Empfangs-Einheiten in dem Gehäuse vorhandenen Leerraum dazu auszunutzen, Querstreben einzusetzen, die die Seitenwände des Gehäuses miteinander verbinden, wobei jeweils zwei sich kreuzende Querstreben zwischen den Sende- bzw. Empfangs-Einheiten angeordnet sind. Die sich kreuzenden Querstreben ergeben eine besonders hohe Steifigkeit des Gehäuses. Diese Querstreben führen zu einer hohen Verbiegungs- und Verwindungssteifigkeit des Gehäuses. Die optoelektronischen Elemente und die optischen Funktionselemente können unmittelbar in das Gehäuse montiert werden, wobei die Querstreben dazu benutzt werden, die optoelektronischen Elemente und die optischen Funktionselemente gegenseitig auszurichten. Dadurch werden die Montagetoleranzen reduziert und die Genauigkeit der Justage verbessert. Die Montage ist zudem einfach, da die optoelektronischen Elemente von der Rückseite und die optischen Funktionselemente von der Frontseite in das Gehäuse eingesetzt werden können. Mit besonderem Vorteil gibt es somit nur eine Montageausrichtung, nämlich senkrecht zur Längsachse. Auch Fehler durch Temperaturausdehnungen werden reduziert.

Ein weiterer wesentlicher Vorteil der Erfindung besteht darin, dass die Querwände zusätzlich die Funktion eines Lichttubus jeweils zwischen den optoelektronischen Elementen und den optischen Funktionselementen erfüllen. Dadurch entfallen eine erhebliche Anzahl an Bauteilen. Das Gehäuse hat in der erfindungsgemäßen Ausgestaltung nicht nur eine mechanische Funktion, sondern auch eine optische. Die Querwände verhindern wie bekannte separate Lichttubusse, dass sendeseitig die optoelektronischen Sende-Elemente seitlich Licht abstrahlen bzw. empfangsseitig, dass Streulicht seitlich auf die Empfangs-Elemente auftrifft. Die sich kreuzenden Querstreben bilden eine einfache wabenförmige Struktur, die die Funktion des Lichttubus besonders einfach und gut erfüllt.

Dazu sind die Querstreben vorzugsweise als im Wesentlichen geschlossene Querwände ausgebildet.

Eine einfache Montage des Lichtgitters ergibt sich, wenn die optoelektronischen Elemente und/oder die optischen Funktionselemente jeweils auf durchgehenden Leisten, Bahnen oder Platten angeordnet bzw. ausgebildet sind. Diese Bahnen, Leisten oder Platten werden frontseitig vor bzw. rückseitig hinter den Querstreben angeordnet. Frontseitig kann das Gehäuse durch eine durchgehende Frontscheibe abgedeckt sein, während die Rückseite des Gehäuses durch einen durchgehenden Gehäuseboden verschlossen sein kann.

Um Lichtgitter verschiedener Länge kostengünstig bereitstellen zu können, ist in Weiterbildung der Erfindung ein modularer Aufbau vorgesehen, wobei mehrere der erfindungsgemäßen Gehäuse zusammensteckbar ausgebildet sind, um eine gewünschte Länge des Lichtgitters zu erhalten.

Dabei vereinfacht es die Montage und bewirkt eine korrekte Ausrichtung der Gehäuse, wenn die Gehäuse über eine Schwalbenschwanz-Verbindung zusammensteckbar sind und gleichzeitig mit der mechanischen Verbindung auch eine elektrische Verbindung herstellbar ist.

Im Folgenden wird die Erfindung anhand eines in der Zeichnung dargestellten Ausführungsbeispieles näher erläutert. Es zeigen
- Fig. 1: eine perspektivische Frontansicht des Gehäuses,
- Fig. 2: eine perspektivische Rückansicht des Gehäuses,

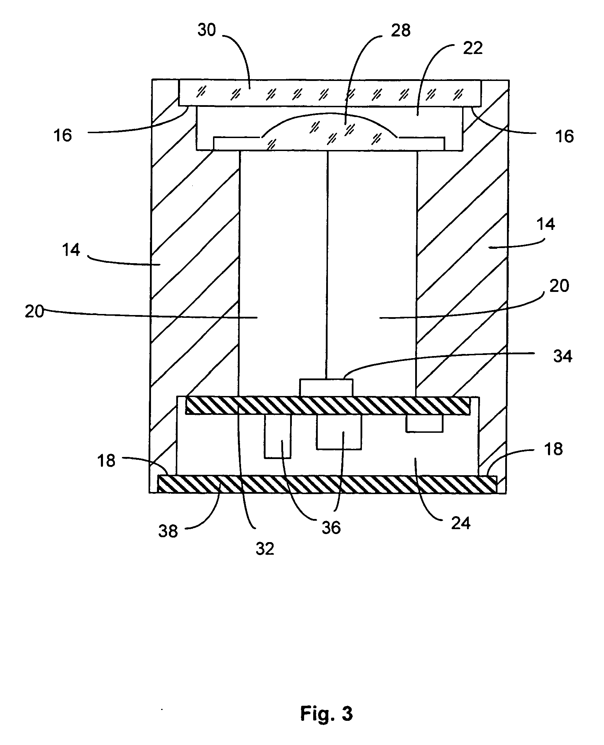

- Fig. 3: einen Schnitt durch das montierte Lichtgitter gemäß der Linie A-A in Fig. 1 und

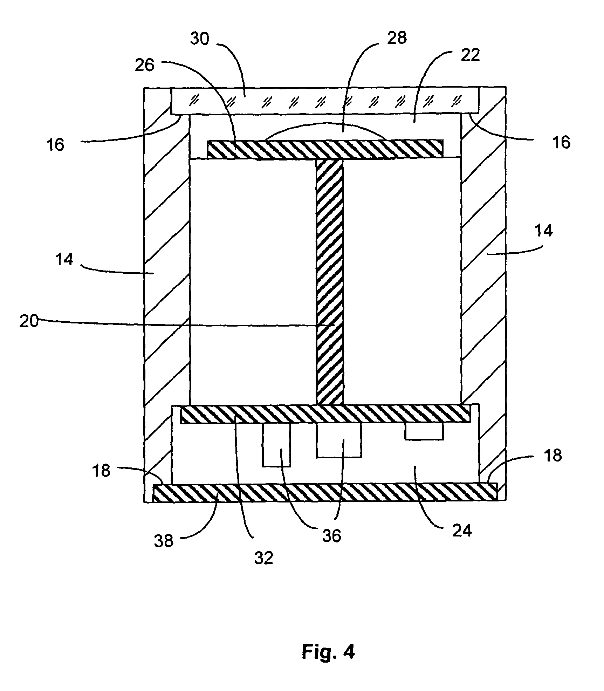

- Fig. 4: einen Schnitt durch das montierte Lichtgitter gemäß der Linie B-B in Fig. 1.

Die Gehäuse auf der Sendeseite und auf der Empfangsseite des Lichtgitters sind gleich ausgebildet. Lediglich die Bestückung mit den optoelektronischen Elementen und ggf. den optischen Funktionselementen ist für die Sendeseite und die Empfangsseite entsprechend der unterschiedlichen Funktion verschieden.

Das Gehäuse 10 ist ein einstückiges Kunststoffteil, welches insbesondere im Spritzgussverfahren hergestellt ist. Das Gehäuse 10 hat die Form einer langgestreckten Leiste, an welcher bspw. Laschen zur Befestigung des Gehäuses an einem Einsatzort angeformt sind.

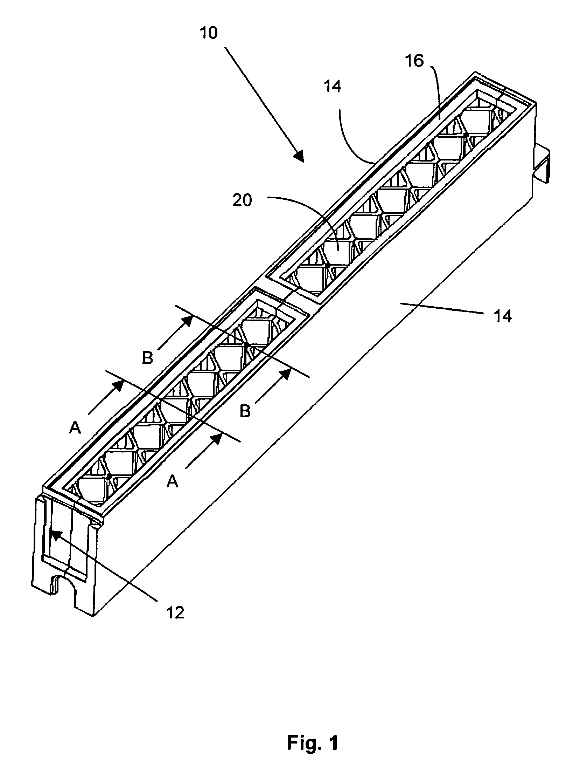

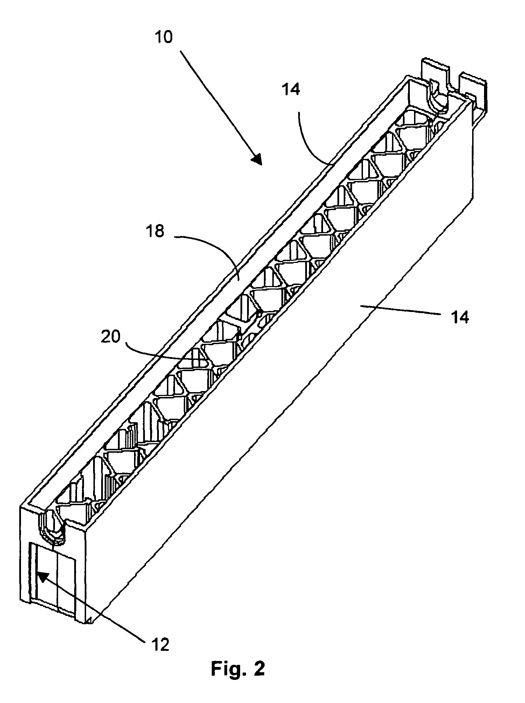

Das Gehäuse 10 weist zwei in Längsrichtung durchgehende geschlossene Seitenwände 14 auf. Die Höhe der Seitenwände 14 entspricht der gesamten Bauhöhe des Gehäuses 10. An den Endstirnflächen ist das Gehäuse 10 geschlossen, wie dies in den Figuren 1 und 2 dargestellt ist. Das Gehäuse 10 kann an wenigstens einer Endstirnfläche auch eine Schwalbenschwanz-Halterung 12 aufweisen, wie dies in den Figuren 1 und 2 für das vordere Ende gezeigt ist. An dieses Ende kann ein weiteres Gehäuse 10 axial fluchtend angesetzt werden, wenn größere Längen des Lichtgitters benötigt werden, wobei über die Schwalbenschwanz-Halterung 12 eine stabile mechanische Verbindung bewerkstelligt ist. Zusätzlich kann in nicht dargestellter Weise vorgesehen sein, dass gleichzeitig mit der mechanischen Verbindung auch eine elektrische Verbindung herstellbar ist. Dazu sind entsprechende, ebenfalls nicht dargestellte Kontaktflächen an den zu verbindenden Stirnenden angeordnet.

Die Seitenwände 14 weisen an ihrer frontseitigen Kante eine innere Stufe 16 und an ihrer rückseitigen Kante eine innere Stufe 18 auf. Die Seitenwände 14 sind in ihrer Längserstreckung in gleichmäßigem Rasterabstand durch sich kreuzende Querstreben 20 einstückig miteinander verbunden. Die Querstreben 20 sind als geschlossene Querwände ausgebildet, deren Flächen in frontseitiger Draufsicht unter einem Winkel von vorzugsweise jeweils etwa 45° zur Fläche der Seitenwände 14 verlaufen. Dadurch kreuzen sich die Querstreben 20 in einer Mittelebene zwischen den Seitenwänden 14 jeweils unter einem Winkel von etwa 90°. Die Querstreben 20 bilden auf diese Weise eine wabenförmige Struktur, die sich in Längsrichtung des Gehäuses 10 aneinander anschließende röhrenförmige Tubusse mit in diesem Fall in etwa quadratischem Querschnitt bildet. Der Rasterabstand der durch die Querstreben 20 gebildeten Waben entspricht dem Rasterabstand der Sende- bzw. Empfangs-Einheiten der Lichtgitter-Leisten und damit dem Abstand der Lichtstrahlen des Lichtgitters.

Die Höhe der Querstreben 20 ist geringer als die Höhe der Seitenwände 14, wodurch frontseitig ein frontseitiger Aufnahmeraum 22 und rückseitig ein rückseitiger Aufnahmeraum 24 gebildet werden. Die Aufnahmeräume 22 und 24 werden jeweils durch die frontseitige bzw. rückseitige Kante der Querstreben 20 und die Seitenwände 14 gebildet und sind gegen die Frontseite des Gehäuses bzw. die Rückseite des Gehäuses offen.

In den frontseitigen Aufnahmeraum 22 wird eine durchgehende Leiste 26 eingelegt und in dem frontseitigen Aufnahmeraum 22 ausgerichtet fixiert. Die Ausrichtung kann dabei über von den Querstreben 20 abstehende Zapfen, auf die die Leiste 26 aufgesteckt wird, geschehen. Die Leiste 26 kann aus einem starren oder flexiblen Material bestehen und trägt optische Funktionselemente 28, z. B. Linsen oder Blendenöffnungen. Vorzugsweise ist die Leiste 26 aus Kunststoff hergestellt und die Funktionselemente 28 sind integriert einstückig mit der Leiste 26 ausgebildet. Die optischen Funktionselemente 28 sind im Rastermaß der durch die Querstreben 20 gebildeten Waben in der Leiste 26 angeordnet. Die Leiste 26 wird so justiert, dass die optischen Funktionselemente 28 koaxial mit der Mittelachse der Waben ausgerichtet sind. Der frontseitige Aufnahmeraum 22 wird durch eine lichtdurchlässige Frontscheibe 30 abgeschlossen, die sich über die gesamte Länge des Gehäuses 10 erstreckt und in die frontseitigen Stufen 16 der Seitenwände 14 eingelegt und in diesen befestigt wird.

In den rückseitigen Aufnahmeraum 24 wird eine durchgehende Elektronik-Platte 32 eingelegt und ausgerichtet fixiert. Die Ausrichtung wird auf die gleiche Weise bewerkstelligt wie die Ausrichtung der Leiste 26. Die Elektronik-Platte 32 trägt auf ihrer frontseitigen Fläche optoelektronische Elemente 34, z. B. sendeseitig Licht emittierende Halbleiter-Elemente bzw. empfangsseitig photoelektrische Halbleiter-Elemente. Diese optoelektronischen Elemente 34 sind im Rastermaß der durch die Querstreben 20 gebildeten Waben angeordnet, wobei die Elektronik-Platte 32 in dem Gehäuse so ausgerichtet ist, dass die optoelektronischen Elemente 34 koaxial mit den Waben und den zugehörigen optischen Funktionselementen 28 ausgerichtet sind. Auf der Rückseite der Elektronik-Platte 32 sind die elektronischen Bauelemente 36 zur Verschaltung der optoelektronischen Elemente 34 angeordnet und verschaltet. Der rückseitige Aufnahmeraum 24 wird durch einen Gehäuseboden 38 verschlossen, der sich über die gesamte Länge des Gehäuses 10 erstreckt und in die rückseitigen Stufen 18 der Seitenwände 14 eingesetzt und befestigt wird.

## Patentansprüche

1. Lichtgitter mit in einem leistenförmigen Gehäuse in dessen Längsrichtung beabstandet angeordneten Sende- bzw. Empfangs-Einheiten, die jeweils aus einem optoelektronischen Element und wenigstens einem in Strahlrichtung von diesem beabstandeten optischen Funktionselement bestehen, wobei das Gehäuse (10) aus zwei sich über dessen gesamte Länge erstrekkenden Seitenwänden (14) besteht, die zwischen den Sende- bzw. Empfangs-Einheiten durch Querstreben (20) miteinander verbunden sind, **dadurch gekennzeichnet, dass** jeweils zwei sich kreuzende Querstreben (20) zwischen den Sende- bzw. Empfangs-Einheiten angeordnet sind, sodass die Querstreben (20) eine wabenförmige Struktur bilden.

2. Lichtgitter nach Anspruch 1, **dadurch gekennzeichnet, dass** die Querstreben (20) als im Wesentlichen geschlossene Querwände ausgebildet sind.

3. Lichtgitter nach Anspruch 2, **dadurch gekennzeichnet, dass** sich die die Querstreben (20) bildenden Querwände über eine Höhe erstrecken, die im Wesentlichen dem Abstand zwischen den optoelektronischen Elementen (34) und den optischen Funktionselementen (28) entspricht.

4. Lichtgitter nach einem der vorhergehenden Ansprüche, **dadurch gekennzeichnet, dass** die Frontseite des Gehäuses (10) durch eine vor den Querstreben (20) in das Gehäuse (10) eingesetzte durchgehende lichtdurchlässige Frontscheibe (30) abgedeckt ist.

5. Lichtgitter nach einem der vorhergehenden Ansprüche, **dadurch gekennzeichnet, dass** die optischen Funktionselemente (28) an einer vor den Querstreben (20) durchgehenden Leiste (26) angeordnet oder ausgebildet sind.

6. Lichtgitter nach einem der vorhergehenden Ansprüche, **dadurch gekennzeichnet, dass** die Rückseite des Gehäuses (10) durch einen in das Gehäuse eingesetzten durchgehenden Gehäuseboden (38) verschlossen ist.

7. Lichtgitter nach einem der vorhergehenden Ansprüche, **dadurch gekennzeichnet, dass** die optoelektronischen Elemente (34) an einer hinter den Querstreben (20) in das Gehäuse (10) eingesetzten durchgehenden Elektronik-Platte (32) angeordnet sind.

8. Lichtgitter nach einem der vorhergehenden Ansprüche, **dadurch gekennzeichnet, dass** die Seitenwände (14) und die Querstreben (20) einstückig aus Kunststoff gefertigt sind.

9. Lichtgitter nach einem der vorhergehenden Ansprüche, **dadurch gekennzeichnet, dass** mehrere Gehäuse (10) zusammensteckbar ausgebildet sind.

10. Lichtgitter nach Anspruch 9, **dadurch gekennzeichnet, dass** die Gehäuse (10) über eine Schwalbenschwanz-Verbindung (12) zusammensteckbar sind und gleichzeitig mit der mechanischen Verbindung auch eine elektrische Verbindung herstellbar ist.

## Claims

1. Light curtain having transmitting and receiving units which are arranged spaced apart in a strip-shaped housing in the longitudinal direction thereof and respectively consisting of an optoelectronic element and at least one optical functional element spaced apart therefrom in the beam direction, the housing (10) consisting of two side walls (14) which extend over the entire length thereof and are interconnected by cross braces (20) between the transmitting and receiving units, **characterized in that** in each case two intersecting cross braces (20) are arranged between the transmitting and receiving units such that the cross braces (20) form a honeycomb structure.

2. Light curtain according to Claim 1, **characterized in that** the cross braces (20) are designed as substantially closed transverse walls.

3. Light curtain according to Claim 2, **characterized in that** the transverse walls forming the cross braces (20) extend over a height which corresponds substantially to the distance between the optoelectronic elements (34) and the optical functional elements (28).

4. Light curtain according to one of the preceding claims, **characterized in that** the front side of the housing (10) is covered by a continuous transparent front pane (30) inserted into the housing (10) in front of the cross braces (20).

5. Light curtain according to one of the preceding claims, **characterized in that** the optical functional elements (28) are arranged or formed on a continuous strip (26) in front of the cross braces (20).

6. Light curtain according to one of the preceding claims, **characterized in that** the rear side of the housing (10) is sealed by a continuous housing base (38) inserted into the housing.

7. Light curtain according to one of the preceding claims, **characterized in that** the optoelectronic elements (34) are arranged on a continuous electronics board (32) inserted into the housing (10) behind the cross braces (20).

8. Light curtain according to one of the preceding claims, **characterized in that** the side walls (14) and the cross braces (20) are produced in one piece from plastic.

9. Light curtain according to one of the preceding claims, **characterized in that** a number of housings (10) are interconnectably designed.

10. Light curtain according to Claim 9, **characterized in that** the housings (10) are interconnectable via a swallowtail connection (12), and an electrical connection can also be produced simultaneously with the mechanical connection.

## Revendications

1. Grille lumineuse comprenant des unités d'émission et de réception disposées dans un boîtier en forme de baguette et espacées dans le sens de sa longueur, qui comprennent chacune un élément optoélectronique et au moins un élément de fonction optique, espacé de celui-ci dans le sens de rayonnement, le boîtier (10) étant constitué de deux parois latérales (14) s'étendant sur toute sa longueur, qui sont reliées l'une avec l'autre par des entretoises transversales (20) entre les unités d'émission et de réception, **caractérisée en ce que**, à chaque fois, deux entretoises transversales (20) qui se croisent sont disposées entre les unités d'émission ou de réception, de sorte que les entretoises transversales (20) forment une structure en forme de nid d'abeille.

2. Grille lumineuse selon la revendication 1, **caractérisée en ce que** les entretoises transversales (20) sont conçues sous la forme de parois transversales sensiblement fermées.

3. Grille lumineuse selon la revendication 2, **caractérisée en ce que** les parois transversales formant les entretoises transversales (20) s'étendent sur une hauteur qui correspond sensiblement à la distance entre les éléments (34) optoélectroniques et les éléments de fonction (28) optiques.

4. Grille lumineuse selon l'une quelconque des revendications précédentes, **caractérisée en ce que** le côté avant du boîtier (10) est masqué par une vitre avant (30) perméable à la lumière, continue et insérée devant les entretoises transversales (20) dans le boîtier (10).

5. Grille lumineuse selon l'une quelconque des revendications précédentes, **caractérisée en ce que** les éléments de fonction (28) optiques sont disposés ou réalisés sur une baguette (26) passant devant les entretoises transversales (20).

6. Grille lumineuse selon l'une quelconque des revendications précédentes, **caractérisée en ce que** le côté arrière du boîtier (10) est fermé par un fond de boîtier (38) continu et inséré dans le boîtier.

7. Grille lumineuse selon l'une quelconque des revendications précédentes, **caractérisée en ce que** les éléments (34) optoélectroniques sont disposés sur une plaque d'électronique (32) continue et insérée derrière les entretoises transversales (20) dans le boîtier (10).

8. Grille lumineuse selon l'une quelconque des revendications précédentes, **caractérisée en ce que** les parois latérales (14) et les entretoises transversales (20) sont fabriquées d'un seul tenant en matériau synthétique.

9. Grille lumineuse selon l'une quelconque des revendications précédentes, **caractérisée en ce que** plusieurs boîtiers (10) sont conçus de façon emboîtable.

10. Grille lumineuse selon la revendication 9, **caractérisée en ce que** les boîtiers (10) peuvent être emboîtés ensemble au moyen d'une liaison en queue d'aronde (12) et également une liaison électrique peut être établie en même temps avec la liaison mécanique.
